# EUROPEAN PATENT APPLICATION

(11) **EP 2 025 243 A2**
(43) Date of publication of application: **18.02.2009**
(21) Application number: 08460030.3
(22) Date of filing: 02.07.2008
(51) Int. Cl.: A23K 1/14, A23K 1/16, A23K 1/18

(54) **Feed supplement containing mixture of sodium butyrate, short-chain fatty acids (SCFA) and yucca schidigeri extract in triglyceride matrix for swine**

(30) Priority: 03.07.2007 PL 38283107
(71) Applicant: Mikalowski, Pawel, 05-126 Nieporet (PL)
(72) Inventor: Michalowski, Pawel, 05-126 Nieporet (PL); Zabielski, ROmuald, 02-997 Warszawa (PL); Valverde, Piedra Jose Luis, 21-003 Ciecirzyn (PL); Kotunia, Anna, 01-926 Warszawa (PL)
(74) Representative: Kwiatkowski, Stanislaw Maciej

(57) **Abstract**

Preparation acidifying and stimulating development of the intestine, presenting a fodder supplement, include according to invention protected in triglyceride matrix sodium butyrate (E-470) in amount 300 mg/g, fumaric acid (E-297) in amount 100 mg/g, D,L-malic acid (E-296) in amount 50 mg/g, citric acid (E-330) in amount 50 mg/g, extract from *Yucca Schidigeri* in amount 25 mg/g, and triglyceride matrix ad 1.0 g.

## Description

### TECHNICAL FIELD

The object of invention is a feed supplement containing mixture of short-chain fatty acids in particular sodium butyrate and the extract from *Yucca Schidigeri.* The composition formulation based on microencapsulation technology allows gradual release of functional substances in the entire length of the gut in a number of species including pigs.

### BACKGROUND OF THE INVENTION

Revolutionary boost of animal production has followed from the second half of XX century for winning meat, milk, eggs and other raw materials. Thus, congestion/overload of animal organism has enforced searching for newest manners of animal protection against negative influences and threats from intensive production conditions. Among risk factors in animal production, it's necessary to mention pathogenic microorganisms which enter the gut with feed, where if favorable conditions for their growth occur, an induction of sickness process will take a place. This leads to reduced production and quite often to animal death causing big losses for the farmer.

Significant drop of manufacturing costs of antibiotics as fed additives has enabled them to use as supplements in animal nutrition. Application of antibiotics in the doses much lower than the therapeutic, resulted in significant improvement in animal production, but on the other hand it led to a development of antibiotic resistant bacterial strains, and as a consequence reduced efficacy of antibiotic treatment of bacterial infections in human and veterinary medicine. By this reason an intensive research started to build new strategies without use of antibiotics as growth promoters. One of them was supplementation of the feedstuff with single or mixture of organic acids. These studies became more intensive following the announcement of the ban on the use of antibiotics as growth promoters by the European Union from 01.01.2006. From that time the use of the same substance as a growth stimulator and antimicrobial drug in human and/or veterinary medicine is prohibited in EU countries as well as meat exporters for the EU countries.

Short-chain fatty acids (SCFA) are the main products of bacterial fermentation of undigested starch and non-starch polysaccharides (fibre). They are important anions in the colonic lumen in human and mammals, affecting both colonocyte morphology and functions. To the SFA belong: acetic acid, propionic acid, butyric acid, lactic acid, formic acid, valeric acid, succinic acid, caproic acid and other. In the mammals large intestine acetate, propionate and butyrate determined 83% of total SCFA concentration (Nyman et al., 1982; Demigné et al., 1985; Rechkemmer ct al., 1988; Bach Knudsen et al., 1993 ). SCFA are rapidly absorbed in the large intestine and stimulate water and salt absorption. Metabolism of SCFA takes a place in the intestinal epithelium, liver and muscles. Little SCFA are lost in the faeces, but not in urine.

One of most strongly expressed SCFA effect is its trophic effect on the gastric and intestinal mucosa. Among the major three SCFAs, the effect of butyrate is the strongest, that of acetate is weaker, and that of propionate is the weakest (Salminen et al., 1998 ). There is an evidence that infusion of SCFA into a large intestine led to trophic effect in the small intestine (Sakata, 1987; Frankiel at el., 1994 ), but the mechanism is still not fully understood.

Butyric acid (CH₃-CH₂-CH₂-COOH) is a saturated carboxylic acid, an oily colourless liquid with unpleasant odour of rotten butter. Its boiling point is 163 °C, it is easily soluble in water and alcohol. Butyrate is a major end-product of anaerobic bacterial fermentation of carbohydrates in the rumen of forestomach animal species (cow, sheep, goat) and in the colon of omnivorous species (swine) and human. Na-butyrate is sodium salt of butyric acid, which stimulates enterocyte differentiation, changes in microvilli surface and mucin secretion *in vitro.* It promotes sodium and water absorption ( Holtug et al., 1992; Binder et al., 1989 ), and is preferred fuel for colonocytes (Schepped et al., 1992; Firmansyah et al., 1989; Reodriger, 1980). Na-butyrate showed cytoprotective and antiinflammatory effects on stomach and intestinal mucosa cells (Andoh et al., 1999; Pender et al., 2000; Chapman et al., 1994), and it promotes elimination and inhibition of cell growth in the colon cancer cells ( McIntyre et al., 1993; Aviv-Green et al., 2002; Velazquez et al., 1996; Hassing et al., 1997; Witehead et al., 1986 ). SCFAs have also antibacterial effect, which was demonstrated on rabbit with intracolonic inoculation of *Shigella flexnerii* (Rabbani et al., 1999 ). In this study SCFAs significantly reduced blood and mucus in the faeces, mucosal congestion, cellular infiltration and necrotic changes. Significant reduction in the number of shigellae in the rabbit colon was also observed.

Galfi et al. (1990), feed pigs (weight 7-102 kg) diet including 0,17% sodium butyrate for 7 days. They found a number of beneficial effects including increased body weight gain and food utilization, trophic effects on the gut, and in composition of gut bacterial microflora. This diet significantly reduced the percentage of coliforms in the ileum in comparison to *Lactobacillus* (negative correlation < 0.05 ). Sodium butyrate increased the level of host advantageous *Lactobacillus spp*. and limited the population of conditionally pathogenic bacteria. Tsukohara et al. (2002) suggested that gluconic acid can act as probiotics that stimulate microbial butyric acid production. Moreover, Roediger (1980) suggested that fatty acids, involving butyrate, produced by anaerobic bacteria, are the main source of energy for colonocyte mucosa, particularly in the distal colon. Butyrate and other SCFA are metabolized via β-oxidation process in the presence of coenzyme A as a detector. Kotunia et. al (2004) investigated the influence of sodium butyrate on the development of small intestine in neonatal piglets feed with artificial milk formula. This study indicated that supplementation of milk formula with sodium butyrate was beneficial for the development of small intestine mucosa and the overall growth in neonatal piglets.

Butyrate is preferred fuel for colonocytes, especially in the distal colon. Theoretically it can provide 80% of energy needed for colonocytes, and 5-10% energy for the entire body. Butyrate is transported from the lumen of pig colon across the luminal cell membrane into colonocyte by a pH-activated electroneutral anion exchanger system (Ritzhaupt et al., 1998). Butyric acid can exchange with a number of intravesicular anions. Butyrate transport is enhanced at low pH, and transport protein is not structurally similar to the enterocyte anion exchanger, band-3. The more acidic extravesicular pH 5.5 provides an optimal pH for activity of the colonic butyrate transporter. Furthermore, inhibition of both lactate and puryvate and specific inhibitors of monocarboxylate transporter protein suggests that the colonic butyrate transporter may belong to the family of the MCT protein monocarboxylate-type transport protein).

In normal rat colon *in vivo* crypt surface proliferation is decrease by butyrate (10 mml/l) and increase with deoxycholate (10mmol/l) (Velázquez et al., 1996).

Butyric acid has influence on apoptosis in cell line large intestine mucosa. In the study by Clausa et al. (2003), piglets were fed with potato starch containing a high proportion of resistant starch to test hypothesis that increased butyrate formation will occur in the colon and contribute to reduced epithelial cell apoptosis, thus leading to reduce skatole (3-methyloindol) formation and absorption. Skatole is formed from L-tryptophan by specialized bacteria in the pig colon. Cell debris resulting from apoptosis of intestinal mucosa cells, is a substrate for skatole formation, thus limited access to cell debris for microorganism is explained by reduced apoptosis process. Butyrate-dependent inhibition of apoptosis in the colon led to significant reduction in skatole formation. It is suggested that the decreased skatole level thanks to butyrate supplementation may improve the sensory quality of pork.

Butyrate was shown to be a physiologic regulator of cell maturation in the intestinal tract, which modulates the pathways of proliferation, differentiation and apoptosis (Heerdt et al., 1994; Augenlicht et al., 1999 ). Augenlicht et al. (2003) showed that sodium butyrate specifically repress the expression of the MUC2 gene, due to it's ability to inhibit histone deacetylase. Among SCFAs, butyrate is a physiological modulator of cell maturation, modulating cell balance and localization in addition to the effect on proliferation and apoptotic pathways, through which butyrate can regulate intestinal homeostasis. Thus, the repressive and stimulatory effects of butyrate on the secretory and absorptive cell lineages documented *in vitro* may play an important role in intestinal homeostasis.

Application of free fatty acids as conservant in animal feedstuffs results in many technical and technological problems. Studies conducted in animals showed negative influence on the upper gastrointestinal tract. Strong acidification of animal fodder resulted in increased saliva production and strongly inhibited gastric acid secretion, without any or with minor effect on the pH in intestinal content. To solve the problem, new triglyceride matrix and technique of microencapsulation of individual compounds was proposed in order to protect the saliva and gastric juice secretions and release the active substance to the intestine.

The effect of individual acids and their salts have been well described but to achieve expected effects a mixture of several fodder supplement and acids started to be applied. Moreover, development of complex feed supplements was suspended in the name of common usage of antibiotics growth stimulators and their low costs.

It is generally known, that the diet witch organic/nonorganic acids and their salts allows to maintain intestinal homeostasis, increases the tolerance toward variation in fed quality and dosage, improves fed digestion and utilization, improves animals health, reduces mortality, and in the case of antibiotics treatment accelerates the recovery. Continuous supplementation with organic acids is needed to achieve the beneficial effects.

A composition according to our invention has task to stimulate the development and function of gastrointestinal tract, simultaneously suppress development of pathogenic microorganisms on the mucosa surface and in the lumen, increase the fed utilization, and improve the zoohygienic conditions.

We found out possible installation of complex preparation composition included sodium butyrate, malic acid, *Yucca Schidigeri* extract and organic acids particularly fumaric and citric acids in trigliceride matrix, which could be applicable on great industrial scale as a feed supplement for animals, especially pig. This composition could connect the features of several supplements which are now present on the market, and decrease their prescribed dosages simultaneously with enhanced effectiveness due to cooperation substances and microencapsulation technology. The greatest economic benefits was achieved according to invention by feed supplementation in sow before delivery, lactating sows and piglets until 60 day of live. Advantageous effect of the preparation has been already evaluated in the *in vitro* and *in vivo* studies, including farm experiments.

### SUMMARY OF THE INVENTION

According to invention, a composition distinguishes, that it include interacting compounds like sodium butyrate (E-470), fumaric acid (E-297), D,L-malic acid (E-296), citric acid (E-330) and extract from *Yucca Schidigeri.*

The advantageous composition of 1 g of preparation is: 200-400 mg/g sodium butyrate, 75- 125 mg/g fumaric acid, 40-80 mg/g D,L-malic acid, 40-80 mg/g citric acid, 20-50 mg/g extract from *Yucca Schidigeri* and triglyceride matrix *ad* 1.0 g. Especially favorable amounts are: sodium butyrate 300 mg/g, fumaric acid 100 mg/g, D,L-malic acid 50 mg/g, citric acid 50 mg/g, extract from *Yucca Schidigeri* 25 mg/g and *ad* 1.0 g triglyceride matrix.

Recommended dosage for monogastric animals, especially for swine:
- Piglets < 20 kg body weight from 1.5 to 2 kg preparation/1000 kg concentrate fodder
- Pig/porker in I phase of fattening from 1.0 to 1.5 kg/ 1000 kg fodder
- Pig/porker in II phase of fattening from 0.8 to 1.0 kg/ 1000 kg fodder
- Sows 3 weeks before delivery from 1.0 to 2.0 kg/ 1000 kg fodder
- Lactating sows from 1.5 to 2.5 kg/ 1000 kg fodder
Additionally, in hard zoohygienic condition double dosage is advised.

### EXAMPLE

A composition as a object of invention is describe in example of technology execution. Formation of preparation act as fodder supplement containing organic acid in triglyceride matrix, beginning from making mixture of sodium butyrate 300 mg/g, extract *Yucca Schidigeri* in amount 25 mg/g, fumaric acid in amount 100 mg/g, D,L-malic acid in amount 50 mg/g previously put on silica carrier and citric acid in amount 50 mg/g, than mass with plant origin triglyceride in amount up to 1.0 g (which corresponded to unsaturated state) is formed in granulator. After correct/precision stirring, microgranules 0.6 to 1.5 mm diameter (respectively to customer needs) are formed. Microgranules are analyzed, collected in multicoated PE-paper bags in amount 25 kg net, labelled and packed in 1000 kg pallet.

Respecting technical and technological aspects, experience and literature data, determined composition for monogastric animals, swine particularly recommended proper dosage considering growth phase and production condition.
Recommended dosage are:
- Piglets < 20 kg body weight from 1.5 to 2 kg preparation/ 1000 kg concentrate fodder
- Pig/porker in I phase of fattening from 1.0 to 1.5 kg/1000 kg fodder
- Pig/porker in II phase of fattening from 0.8 to 1.0 kg/1000 kg fodder
- Sows 3 weeks before delivery from 1.0 to 2.0 kg/1000 kg fodder
- Lactating sows from 1.5 to 2.5 kg/1000 kg fodder
Additionally, in hard zoohygienic condition double dosage is advised.

Preparation exist as fodder supplement must fulfil the following requirements:
- Composition available for swine, considering growth phase in animal organism development
- Stimulate intestinal development and function
- Maintain proper pH of gastrointestinal content
- Increase the resistance and immunity by modulating gut microflora
- Increase the bioavailability and fed utilization
- Improve zoohygienic condition in holding compartment - effect on animal welfare
- Adapt to use during feed preparation process

Necessity of providing animals protection from contaminated environment and impact of feed quality and composition changes on animals health, and consequently efforts to reduce economical losses in animal production, cause that applicant conducted experiments to elaborate ecological preparation, based on substances naturally occurring in animal gastrointestinal tract with known in nutritional practice extract from *Yucca Schidigeri.* Preparation added to fodder should according to invention, provide correct development and functions of the gut, stabilization of gut pH, controlled release of components after passage by stomach, increased immunity and resistance of animal organism, and limit the development and infectivity of pathogenic and conditionally pathogenic bacteria, improved zoohygienic conditions in holding compartment by reducing emission of ammonia and hydrogen sulphide.

Preparation composition according to invention fits for monogastric animal, especially for pigs, the dosages are adapted to phases of animal development.

Addition of preparation according to invention for piglets and pig diet preparation effective in programmed acids realized along gastrointestinal tract. Triglyceride matrix releases small amount of organic acid in the stomach lumen after consuming, where it helps to maintain low content reaction but without strong influence on gastric juice pH. So, there is important to control fodder buffering ability, in consequence limiting or eliminating from fodder, components with high buffering abilities like some mineral and proteins.

In the duodenum, pancreatic lipase supports slow release of organic acid from triglyceride matrix thereby preventing from rapid pH reduction and enabling modulation of intestine ecosystem.

Efficiency of acidifying the gut content is a result of careful selection of organic acid based on their dissociation constant (pKa), ability to passage stomach (protection) and their influence on intestinal microflora.

Fumaric acid and butyrate acid is rapidly metabolized in intestinal mucosa cell entering Krebs cycle. Preparation according to invention, provides slow gradual release of acids from triglyceride matrix along the entire gut, and protects local over-acidification of the intestinal content. Such slow gradual release allows to significantly reduce the amount of acids in the fodder.

Metabolic processes involved in digestion are associated with production of ammonia and hydrogen sulphide, which are excreted. Their presence in animal houses causes numerous irritations of upper airways, nose and eyes mucosa, and skin irritation. It affects animals general resistance and enhances the susceptibility to different kinds of infections. Extract from *Yucca Schidigeri* has well described effect on the reduction of gas emission and improving zoohygienic condition in farm animals.

Described examples do not range over, but there is only examples according to invention, which range is defined by patent reservations. Below it's present publications links invoked in description of invention.

### REFERENCES

1. Akira Andoh, Bamba T., Sasaki M. Physiological and Anti-Inflamatory Roles Of Diatery Fiber and Butyrate in Intestinal Functions. Journal of Parenteral and Enteral Nutrition 1999; 23(5): 70-73.
2. Augenlicht L.H, Li Shi., Mariadson J., Laboisse C., Velcich A. Represion of MUC2 gene expression by butyrate, a physiological regulator of intestine cell maturation. Oncogene 2003; 22: 4983-4992.
3. Augenlicht L.H., Anthony G.M., Church T., Edelmann W., Kucherlapati R., Yang K., Lipkin M., Heerdt B.G. Short-chain fatty acid metabolism, apoptosis, and Apc-initiated tumorogenesis in the mouse gastrointestinal mucosa. Cancer Research 1999; 59: 6005-6009.
4. Aviv-Green C., Polak-Charcon S., Madar Z., Schwartz B. Different molecular events account for butyrate-induced apoptosis in two human colon cancer cell lines. The Journal of Nutrition 2002; 132 (7): 1812-18.
5. Bach Knudsen Knud E., Jensen B.B., Hansen I. Oat bran but ot a β-glucan-enriched oat fraction enhances butyrate production in the large intenstine of pigs. J. Nut. 1993; 123(7): 1235-1247.
6. Binder H.J., Mehta P. Short-chain fatty acids stimulate active sodium and chloride absorption in vitro in the rat distal colon. Gastroenterology 1989; 96: 989-996.
7. Chapman M.A.S., Grahn M.F., Boyle M.E., Hutton M., Rogers J., Williams N.S. Butyrate oxidation is impaired in the colonic mucosa of sufferers of quiescent ulcerative colitis. Gut 1994; 35(1): 73-76.
8. Claus R., Lösel D., Lacorn M., Mentschel J., Schenkel H. Effect of butyrate on apoptosis in the pig colon and it's consequence for skatole formation and tissue accumulation. J. Anim. Sci.. 2003, 81: 239-248.
9. Demigné C., Remesy C. Stimulation of absorption of volatile fatty acids and minerals in cecum of rats adapted to a very hight fiber diet. J. Nutr. 1985; 115: 53-60.
10. Firmansyah A., Penn D., Lebenthal E. Isolated colonocytes metabolism of glucose, glutamine, n-butyrate, β-hydroxybutyrate in malnutrition. Gastroenterology 1989; 97: 622-629.
11. Frankiel W.L., Wei Zhang, Singh A.., Klurfeld D.M.., Don S., Sakata T., Modlin I.., Rombeua J.L . Mediation of the trophic effects of short-chain fatty acids on rat jejunum and colon"; Gastroenterology 1994; 106: 375-380.
12. Galfi P., Bokori J. Feeding trial in pigs with a diet containing sodium n-butyrate. Acta Veterinaria Hungarica 1990; 38(1-2): 3-17.
13. Hassing C.A., Tong J.K., Schreiber S.L. Fiber-derived butyrate and the prevention of colon cancer. Chemistry and Biology 1997; 4: 783-789.
14. Heerdt B.G., Houston M.A., Augenlicht L.H. Potentiation by specyfic short fatty acids of differentiation and apoptosis in human colonic carcioma cell lines.Cancer Res. 1994; 54 :3288-3294.
15. Holtug K., Rasmussen H.S., Mortensen P.B. An in vitro study of short-chain fatty acid concentrations, production and absorption in pig (Sus Scrofa) colon. Comp. Biochem. Physiol. 1992; 103A(1): 189-197.
16. Kotunia A., Woliński J., Laubitz D., Jurkowska M., Rome V., Guilloteau P., Zabielski R. Effect of sodium butyrate on the small intestine development in neonatal piglets feed by artificial sow. J. Physiol. Pharmacol. 2004, 55, suppl 2, 59-68.
17. McIntyre A., Gibson P.R., Young G.P. Butyrate production from diatery fiber and protection against large bowel cancer in rat model. Gut 1993; 34: 386-391.
18. Nyman M., Aso N.G. Fermentation of diatery fiber components in rat intestinal tract. Br. J. Nutr. 1982; 47: 357-366.
19. Pender S., Quenn J.J., Sanderson J.R, MacDonald T.T. Butyrate upregulates stromelysin-1 production by intestinal mesenchymal cells. Am. J. Physiol. Gastrointest. Liver Physiol. 2000; 279: G918-G924.
20. Rabbani M., Akbert J., Hamidur Rahman A.S.M., Mul Isal M., Nasirul Islam K.M., Alam K. Short- chain fatty acids improve clinical, pathological, and microbiologic features of experimental Shigellosis. J. Inf. Dis. 1999; 179(2) :390397.
21. Rechkemmer G., Ronnau K., von Englehardt W. Fermentation of polisaccharides and absorption of short chain fatty acids in the mammalian hindgut. Comp Biochem Physiol. 1988; 90A: 563-568.
22. Reodriger W.E.W. Role of anaerobic bacteria in the metabolic welfare of the colonic mucosa in man. Gut 1980; 21: 793 - 798.
23. Ritzhaupt A., Antony Ellis., Ken B., Hosie and Soraya P. Shirazi-Beechey. The characterization of butyrate transport across pig and human colonic luminal membrane. J. Physiol. 1998, 507(3): 819:830.
24. Sakata T. Stimulatory effect of short chain fatty acids on epithelial cell proliferation in the rat intestine: A possible explanation for trophic effects of fermentable fiber,gut microbes and luminal trophic factors. Br J Nutr 1987; 58: 95-103.
25. Salminen S., Bouley C., Boutron-Ruault M.C., Cummings J.H., Franck A., Gibson G.R., Isolauri E, Moreau M.C., Roberfroid M., Rowland I. Functional food science and gastrointestinal physiology and function. Br. J. Nutr. 1998; 80(s1):s147-s171.
26. Schepped W., Sommer H., Kircher T., Paganelli G.M., Bartram P, Christi S, Richter F, Dusel G, Kasper H. Effect of butyrate enemas on the colonic mucosa in distal ulcerative colitis. Gastroenterology 1992; 103: 51-56.
27. Tsukahara Takamitsu, Koyama H., Okada M., Ushida K. Stymulation of butyrate production by gluconic acid in batch culture of pig cecal digesta and identyfication of butyrate-producing bacteria. J. Nutr. 2002; 132:2229-2234.
28. Velázquez O.C., Ledered H.M., Rombeau J.L. Butyrate and the colonocyte, implication for neoplasia. Dig. Dis. Sci. 1996; 41(4): 727-739.
29. Whitehead R.H., Young G.P., Bhathal P.S. Effects of short chain fatty acids on new human colon carcinoma cell line (LIM 1215). Gut 1986; 27: 1436-1457

## Claims

1. A composition presenting fodder supplement inclusive mixture of sodium butyrate, organic acids and extract from *Yucca Schidigeri,* supporting gut development and function, assigned for swine particularly, **characterized in that** includes interacting sodium butyrate (E-470), fumaric acid (E-297), D,L-malic acid (E-296), citric acid (E-330), and extract from *Yucca Schidigeri.*

2. A composition according to claim 1, **characterized in that** includes 200-400 mg/g sodium butyrate(E-470), 75-125 mg/g fumaric acid(E-297), and/or 40-80 mg/g D,L-malic acid (E-296), and/or 40-80 mg/g citric acid (E-330), and 20-50 mg/g extract from *Yucca Schidigeri* and triglyceride matrix ad 1.0 g.

3. A composition according to claim 2 , **characterized in that** includes sodium butyrate (E-470) 300 mg/g, fumaric acid (E-297) 100 mg/g, extract from *Yucca Schidigeri* 25 mg/g and/or D,L-malic acid (E-296) 50 mg/g, and/or citric acid (E-330) 50 mg/g, and triglyceride matrix as 1.0 g.

4. A composition according to claim 1, **characterized in that** dosage for monogastric animals, especially swine, form as follow:
• Piglets <20 kg body weight from 1.5 to 2 kg preparation/1000 kg concentrate fodder
• Pig/porker in I phase of fattening from 1.0 to 1.5 kg/1000 kg fodder
• Pig/porker in II phase of fattening from 0.8 to 1.0 kg/1000 kg fodder
• Sows 3 weeks before delivery from 1.0 to 2.0 kg/1000 kg fodder
• Lactating sows from 1.5 to 2.5 kg/1000 kg fodder

5. A composition according to claim 4, **characterized in that** dosage is doubled in hard zoohygienic conditions.
